# FASCICULE DE BREVET EUROPEEN

(11) **EP 3 145 328 B1**
(45) Date de publication et mention de la délivrance du brevet: **24.01.2018**
(21) Numéro de dépôt: 15720379.5
(22) Date de dépôt: 14.04.2015
(51) Int. Cl.: A23L 13/00

(54) **PROCÉDÉ DE FABRICATION D'UN BLOC DE VIANDE DESTINÉ A ÊTRE DÉCOUPÉ EN FEUILLES**
VERFAHREN ZUR HERSTELLUNG EINES IN SCHEIBEN SCHNEIDBAREN FLEISCHBLOCKS
METHOD FOR PRODUCING A BLOCK OF MEAT INTENDED TO BE CUT INTO SLICES

(30) Priorité: 16.04.2014 FR 1453419
(43) Date de publication de la demande: 29.03.2017
(73) Titulaire: CONVIVIAL, 03300 Creuzier Le Vieux (FR)
(72) Inventeur: MEUNIER, Jean, 03700 Bellerive (FR)
(74) Mandataire: de la Bigne, Guillaume Michel Marie
(86) Numéro de dépôt international: PCT/FR2015/050990
(87) Numéro de publication internationale: WO 2015/159009

(56) Documents cités:
- EP-A1- 0 336 798
- FR-A1- 2 781 337
- FR-A1- 2 795 605

## Description

La présente invention concerne le domaine technique de la fabrication d'un élément de viande restructurée.

On souhaite généralement qu'un morceau de viande restructurée conserve autant que possible, à l'égard de sa mastication par un consommateur, des propriétés similaires à celles d'un morceau de viande non déstructurée.

Ceci est obtenu notamment en préservant au mieux la structure des lipocytes et des myofibrilles de la viande dont le diamètre est généralement inférieur à 50 micromètres.

Pour préserver de façon relativement satisfaisante la structure des lipocytes et des myofibrilles, on a proposé dans l'état de la technique de fabriquer des fragments de viande ayant des formes générales de feuilles. Ces fragments de viande sont ensuite convoyés à travers des moyens de tassement cohésif pour former un bloc de fragments de viande tassés. Puis, le bloc est tranché de façon à former une ébauche qui est ensuite comprimée pour former un élément de viande restructurée. Enfin, l'élément de viande restructurée est traité (surgélation, tranchage, etc.) ou consommé comme un morceau de viande non déstructurée obtenu par découpage d'un animal.

On connaît déjà dans l'état de la technique, notamment d'après FR 2 781 337, un procédé de fabrication d'un bloc de viande destiné à être découpé en feuilles. Selon ce procédé :
- on forme une masse d'éléments de viande,
- on refroidit la masse d'éléments de viande en lui faisant parcourir un trajet de refroidissement au cours duquel on transmets à la masse une quantité de frigories, et
- on forme le bloc de viande par compression de la masse d'éléments de viande refroidis.

Les éléments de viande sont formés généralement par des morceaux de viande obtenus par découpage d'un animal qui sont ensuite désossés et parés.

Le bloc de viande obtenu par compression de la masse d'éléments de viande refroidis doit être facile à trancher. Or, dans FR 2 781 337, on propose de refroidir la masse d'éléments de viande en lui faisant parcourir un trajet dans un tunnel de réfrigération dans des conditions telles, qu'après compression des éléments de viande refroidis et formation du bloc de viande, ce bloc n'est pas toujours facile à trancher avec des moyens permettant d'assurer une cadence de tranchage élevée.

En effet, si la température du bloc de viande obtenu par compression de la masse d'éléments de viande refroidis est trop basse ou trop élevée, le bloc est trop mou ou trop dur, ce qui crée des défauts de tranchage des feuilles.

Or, dans FR 2 781 337, on fait parcourir à la masse d'éléments de viande un trajet de refroidissement au cours duquel la quantité de frigories transmise est telle que, à la fin du trajet, la température à la surface des éléments de viande est comprise entre -25 et -35 °C. Après compression des éléments de viande refroidis et formation du bloc de viande, ce bloc est relativement dur à trancher, notamment à cadence élevée.

On connaît également dans l'état de la technique, notamment d'après EP 0 336 798, un procédé de fabrication d'un bloc de viande destiné à être découpé en feuilles, au cours duquel on porte la surface de morceaux de viande à une température de l'ordre de -25°C à -35°C par injection de neige carbonique.

Le refroidissement par injection de neige carbonique présente le désavantage d'être trop lent pour éviter une cristallisation indésirable de l'eau contenue dans les éléments de viande. En effet, cette technique de refroidissement ne permet pas de transmettre la quantité de frigories adéquate en une durée suffisamment courte pour éviter la formation de cristaux de glace dans la viande.

Or, on cherche à éviter l'apparition de ces cristaux car ils engendrent une destruction des myofibrilles de la viande et un exsudat nuisible au goût de la viande.

Le refroidissement par injection de neige carbonique présente également le désavantage d'être particulièrement onéreux.

L'invention a notamment pour but d'optimiser la fabrication d'un bloc de viande destiné à être découpé en feuilles de façon à permettre un tranchage efficace et de qualité de ce bloc, à cadence élevée, et d'éviter, ou pour le moins de limiter, la cristallisation indésirable de l'eau contenue dans les éléments de viande

À cet effet, l'invention a notamment pour objet un procédé de fabrication d'un bloc de viande destiné à être découpé en feuilles, du type dans lequel
- on forme une masse d'éléments de viande en vrac,
- on refroidit la masse d'éléments de viande en lui faisant parcourir un trajet de refroidissement au cours duquel on transmet à la masse une quantité de frigories, et
- on forme le bloc de viande par compression de la masse d'éléments de viande refroidis,
**caractérisé en ce que**
- on forme la masse d'éléments de viande de façon qu'elle comprenne essentiellement des éléments de viande d'épaisseur comprise entre 0,5 et 5 cm, la température à la surface de ces éléments de viande étant comprise entre 1 et 5 °C au départ du trajet de refroidissement, puis
- on fait parcourir à la masse d'éléments de viande le trajet de refroidissement, ce trajet ayant une durée comprise entre 4 et 8 minutes et la quantité de frigories transmise à la masse d'éléments de viande au cours de ce trajet étant déterminée pour qu'à la fin du trajet de refroidissement la température à la surface des éléments de viande soit comprise entre -10 et -20 °C.

La durée du trajet de refroidissement, comprise entre 4 et 8 minutes, permet d'assurer un refroidissement suffisamment rapide des éléments de viande pour éviter une cristallisation indésirable de l'eau contenue dans la viande engendrant une destruction des myofibrilles de la viande.

Les éléments de viande, dont l'épaisseur est comprise entre 0,5 et 5 cm, présentent, en fin de trajet de refroidissement, une température comprise entre -10 et -20°C à leur surface. Cependant, au coeur des éléments de viande, la température est relativement plus élevée. Ainsi, après compression de la masse d'éléments de viande refroidis, on obtient un bloc de viande dans lequel les surfaces des éléments de viande comprimés forment une trame froide, en général à une température inférieure à -5°C, alors que le coeur des éléments de viande, qui constitue la plus grande partie de la masse du bloc de viande comprimée, est à une température généralement supérieure à -2,5°C (on ndera que l'étape de compression entraîne le réchauffement des éléments de viande). Ainsi, la répartition des températures dans le bloc de viande obtenu par compression de la masse d'éléments de viande refroidis permet un tranchage efficace et de qualité du bloc en feuilles, permettant une cadence de tranchage relativement élevée par exemple au moyen d'un disque de tranchage tournant entre 450 et 550 tr/mn.

Suivant d'autres caractéristiques optionnelles de ce procédé de fabrication d'un bloc de viande :
- on forme la masse d'éléments de viande de façon qu'elle comprenne essentiellement des éléments de viande d'épaisseur comprise entre 3 et 4 cm ;
- la quantité de frigories transmise à la masse d'éléments de viande au cours du trajet de refroidissement est comprise entre 7 et 25 frigories/heure/100 kg de viande ;
- la quantité de frigories est transmise à la masse d'éléments de viande au cours du trajet de refroidissement en soumettant cette masse à au moins un flux d'air très froid, de préférence plusieurs flux d'air très froid s'étendant suivant plusieurs directions transversalement au trajet de la masse ;
- on comprime la masse d'éléments de viande refroidis par pressage d'une quantité de cette masse dans des moyens de compression agissant suivant trois directions de compression sensiblement orthogonales ;
- la quantité de masse d'éléments de viande destinée à être comprimée par les moyens de compression au cours d'une étape de compression est approvisionnée dans un volume variable de compression, défini dans les moyens de compression, en deux temps au cours desquels on approvisionne respectivement à peu près deux moitiés de la quantité de masse d'éléments de viande à comprimer, de façon à favoriser la répartition de la masse d'éléments de viande dans le volume variable de compression avant l'étape de compression.

L'invention a également pour objet un procédé de fabrication de fragments de viande en forme générale de feuilles, du type dans lequel on fabrique un bloc de viande destiné à être découpé en feuilles,
**caractérisé en ce que** l'on fabrique le bloc de viande conformément au procédé de fabrication d'un bloc de viande selon l'une quelconque des revendications précédentes, et on découpe ce bloc en feuilles.

Suivant une caractéristique optionnelle de ce procédé de fabrication de fragments de viande, on découpe le bloc de viande de façon à former des feuilles ayant une surface comprise entre 5 à 10 cm² et une épaisseur comprise entre 3 et 9 dixièmes de mm.

L'invention sera mieux comprise à la lecture de la description qui va suivre donnée uniquement à titre d'exemple et faite en se référant aux dessins annexés dans lesquels :
- la figure 1 est une vue de dessus d'une installation pour la mise en oeuvre d'un procédé de fabrication de fragments de viande en forme générale de feuilles, selon l'invention ;
- la figure 2 est une vue en perspective, suivant la flèche II - Il de la figure 1, de l'installation représentée sur la figure 1 ; et
- la figure 3 est une vue schématique de moyens de cette installation permettant de comprimer la masse d'éléments de viande refroidis.

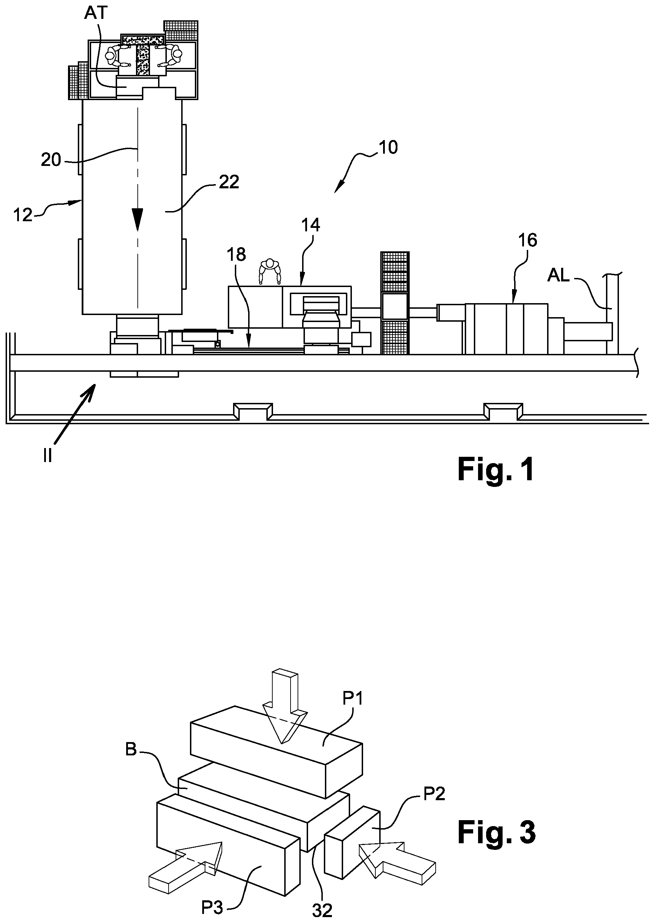

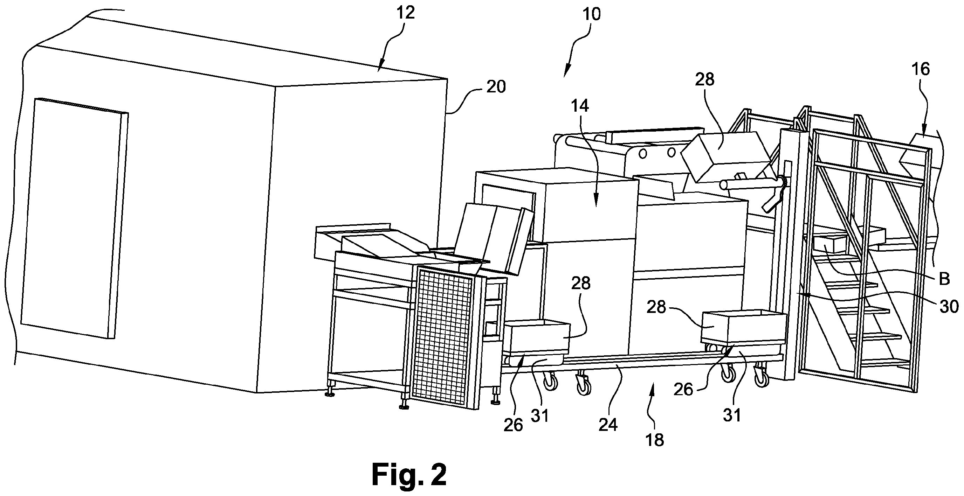

On a représenté sur les figures 1 et 2 une installation, désignée par la référence générale 10, pour la mise en oeuvre du procédé de fabrication de fragments de viande en forme générale de feuilles, selon l'invention.

Au cours de ce procédé, on fabrique tout d'abord un bloc de viande conformément à un procédé de fabrication d'un bloc de viande selon l'invention puis on découpe ce bloc en feuilles.

L'installation 10 comprend une extrémité amont AT approvisionnée en éléments de viande et une extrémité aval AL fournissant des feuilles de viande après traitement des éléments de viande initiaux.

L'installation 10 comprend, d'amont en aval, des moyens de refroidissement 12, des moyens de compression 14 et des moyens de tranchage 16. L'installation 10 comprend également des premiers moyens de convoyage 18, reliant les moyens de refroidissement 12 aux moyens de compression 14 et des seconds moyens de convoyage 19 reliant les moyens de compression 14 aux moyens de tranchage 16.

Conformément au procédé de fabrication d'un bloc de viande, on forme tout d'abord une masse d'éléments de viande en vrac. Les éléments de viande sont formés généralement par des morceaux de viande obtenue par découpage d'un animal qui sont ensuite désossés et parés.

On forme la masse d'éléments de viande en vrac de façon qu'elle comprenne essentiellement des éléments de viande d'épaisseur comprise entre 0,5 et 5 cm. De préférence, on forme la masse d'éléments de viande de façon qu'elle comprenne essentiellement des éléments de viande d'épaisseur comprise entre 3 et 4 cm. La masse d'éléments de viande en vrac est fabriquée ou amenée à l'extrémité amont AT de l'installation 10.

Ensuite, on refroidit la masse d'éléments de viande en vrac en lui faisant parcourir un trajet 20 de refroidissement au cours duquel on transmet à cette masse une quantité de frigories. Le trajet de refroidissement 20 est parcouru à travers une enceinte 22 dans laquelle sont logés les moyens de refroidissement 12.

Au départ du trajet de refroidissement 20, c'est-à-dire à une extrémité amont de l'enceinte 22, la température à la surface des éléments de viande est comprise entre 1 et 5 °C.

Le temps de parcours du trajet 20 par la masse d'éléments de viande en vrac est compris entre 4 et 8 minutes.

La quantité de frigories transmise à la masse d'éléments de viande au cours de ce trajet est déterminée pour qu'à la fin du trajet de refroidissement la température à la surface des éléments de viande soit comprise entre -10 et -20 °C.

De préférence, la quantité de frigories transmise à la masse d'éléments de viande au cours du trajet de refroidissement est comprise entre 7 et 25 frigories/heure/100 kg de viande. Ceci permet de transmettre aux éléments de viande une quantité de frigories importantes en un temps réduit, grâce à un coefficient de brassage de l'air (quantité d'air déplacée par unité de temps) important. On évite ainsi, ou pour le moins on limite, la cristallisation de l'eau dans les éléments de viande.

Les moyens de refroidissement 12 comprennent des moyens classiques de formation d'au moins un flux d'air très froid logés à l'intérieur de l'enceinte 22. De tels moyens sont décrits par exemple dans EP 1 766 303. De préférence, les moyens de formation de flux d'air très froid permettent de former plusieurs flux d'air très froid s'étendant suivant plusieurs directions transversalement au trajet 20 de la masse d'éléments de viande en vrac. La température des flux d'air très froid est par exemple voisine de -40 °C.

À la fin du trajet 20, c'est-à-dire à une extrémité aval de l'enceinte 22, la masse d'éléments de viande refroidis sort de l'enceinte 20 de façon à être transportée, par les premiers moyens de convoyage 18 depuis l'enceinte 22 jusqu'aux moyens de compression 14.

Les premiers moyens de convoyage 18, qui sont visibles plus clairement sur la figure 2, comprennent, par exemple, des rails 24 sur lesquels circule au moins un chariot 26 permettant de faire la navette entre la sortie de l'enceinte 22 et une entrée d'approvisionnement des moyens de compression 14. Le chariot 26 comprend, dans l'exemple décrit, une benne 28 servant de réceptacle pour la masse d'éléments de viande refroidis. Des moyens élévateurs 30, connus en soi, permettent de déplacer en hauteur la benne 28 du chariot 26 entre une position basse de liaison avec un châssis roulant 31 du chariot 26 sur les rails 24 et une position haute de déversement, par gravité, de la masse d'éléments de viande refroidis dans l'entrée d'approvisionnement des moyens de compression 14.

On notera que sur la figure 2, le chariot 26 et la benne 28 sont représentés plusieurs fois ce qui correspond à diverses positions de ces chariot 26 et benne 28.

De préférence, comme on peut le voir sur la figure 3, les moyens de compression 14 agissent suivant trois directions de compression sensiblement orthogonales. Ainsi, sur la figure 3, on a schématisé trois pistons P1, P2, P3, déplaçables suivant les trois directions de compression orthogonales, destinés à comprimer une quantité de masse d'éléments de viande refroidis. Des moyens de compression de ce type sont commercialisés notamment par la société suisse Hoegger AG.

Les trois pistons P1, P2, P3 délimitent donc un volume variable 32 dans lequel la masse d'éléments de viande est comprimée. De préférence, pour faciliter le remplissage de ce volume 32, la quantité de masse d'éléments de viande destinée à être comprimée dans ce volume 32 au cours d'une étape de compression est approvisionnée dans ce volume 32 en deux temps. Au cours de ces deux temps on approvisionne respectivement à peu près deux moitiés de la quantité de masse d'éléments de viande à comprimer, de façon à favoriser, avant la compression, la répartition de la masse d'éléments de viande encore en vrac dans le volume 32.

Après remplissage du volume 32, la masse d'élément de viande est comprimée de façon à former un bloc B de viande tel que représenté sur la figure 3.

Le bloc de viande B est ensuite transporté, par les seconds moyens de convoyage 19 jusqu'aux moyens de tranchage 16 dans lesquels il est tranché en feuilles. Dans l'exemple décrit, les moyens de tranchage 16 sont du type à disque de tranchage et les feuilles de viande produites par ces moyens de tranchage 16 (donc fournies à l'extrémité aval AL de l'installation 10) ont une surface comprise entre 5 à 10 cm² et une épaisseur comprise entre 3 et 9 dixièmes de mm.

Des moyens de tranchage de ce type sont commercialisés notamment par la société allemande Weber Maschinenbau GmbH.

Les feuilles de viandes peuvent être transformées ensuite en élément de viande restructurée par une installation de fabrication d'un élément de viande restructurée telle que décrite par exemple dans WO 2007/085773.

## Revendications

1. Procédé de fabrication d'un bloc de viande destiné à être découpé en feuilles, du type dans lequel
- on forme une masse d'éléments de viande en vrac,
- on refroidit la masse d'éléments de viande en lui faisant parcourir un trajet (20) de refroidissement au cours duquel on transmet à la masse une quantité de frigories, et
- on forme le bloc de viande (B) par compression de la masse d'éléments de viande refroidis,
**caractérisé en ce que**
- on forme la masse d'éléments de viande de façon qu'elle comprenne essentiellement des éléments de viande d'épaisseur comprise entre 0,5 et 5 cm, la température à la surface de ces éléments de viande étant comprise entre 1 et 5 °C au départ du trajet de refroidissement, puis
- on fait parcourir à la masse d'éléments de viande le trajet de refroidissement (20), ce trajet (20) ayant une durée comprise entre 4 et 8 minutes et la quantité de frigories transmise à la masse d'éléments de viande au cours de ce trajet (20) étant déterminée pour qu'à la fin du trajet de refroidissement (20) la température à la surface des éléments de viande soit comprise entre -10 et -20 °C.

2. Procédé selon la revendication 1, dans lequel on forme la masse d'éléments de viande de façon qu'elle comprenne essentiellement des éléments de viande d'épaisseur comprise entre 3 et 4 cm.

3. Procédé de fabrication selon la revendication 1 ou 2, dans lequel la quantité de frigories transmise à la masse d'éléments de viande au cours du trajet de refroidissement (20) est comprise entre 7 et 25 frigories/heure/100 kg de viande.

4. Procédé de fabrication selon l'une quelconque des revendications précédentes, dans lequel la quantité de frigories est transmise à la masse d'éléments de viande au cours du trajet de refroidissement (20) en soumettant cette masse à au moins un flux d'air très froid, de préférence plusieurs flux d'air très froid s'étendant suivant plusieurs directions transversalement au trajet de la masse.

5. Procédé de fabrication selon l'une quelconque des revendications précédentes, dans lequel on comprime la masse d'éléments de viande refroidis par pressage d'une quantité de cette masse dans des moyens de compression (16) agissant suivant trois directions de compression sensiblement orthogonales.

6. Procédé de fabrication selon la revendication 5, dans lequel la quantité de masse d'éléments de viande destinée à être comprimée par les moyens de compression (16) au cours d'une étape de compression est approvisionnée dans un volume variable de compression (32), défini dans les moyens de compression (16), en deux temps au cours desquels on approvisionne respectivement à peu près deux moitiés de la quantité de masse d'éléments de viande à comprimer, de façon à favoriser la répartition de la masse d'éléments de viande dans le volume variable de compression (32) avant l'étape de compression.

7. Procédé de fabrication de fragments de viande en forme générale de feuilles, du type dans lequel on fabrique un bloc de viande (B) destiné à être découpé en feuilles,
**caractérisé en ce que** l'on fabrique le bloc de viande (B) conformément au procédé de fabrication d'un bloc de viande selon l'une quelconque des revendications précédentes, et on découpe ce bloc (B) en feuilles.

8. Procédé de fabrication selon la revendication 7, dans lequel on découpe le bloc de viande (B) de façon à former des feuilles ayant une surface comprise entre 5 à 10 cm² et une épaisseur comprise entre 3 et 9 dixièmes de mm.

## Patentansprüche

1. Verfahren zur Herstellung eines Fleischblocks, der dazu bestimmt ist, in Scheiben geschnitten zu werden, des Typs, bei dem
- eine Masse aus losen Fleischelementen gebildet wird,
- die Masse aus Fleischelementen gekühlt wird, indem sie eine Kühlstrecke (20) durchläuft, in deren Verlauf der Masse eine Frigorienmenge zugeführt wird,
- der Fleischblock (B) durch Komprimieren der Masse aus gekühlten Fleischelementen gebildet wird,
**dadurch gekennzeichnet, dass**
- die Masse aus Fleischelementen in der Form gebildet wird, dass sie im Wesentlichen Fleischelemente mit einer Dicke zwischen 0,5 und 5 cm enthält, wobei die Temperatur an der Oberfläche dieser Fleischelemente zwischen 1 und 5 °C zu Beginn der Kühlstrecke beträgt, und dann
- die Masse aus Fleischelementen die Kühlstrecke (20) durchläuft, wobei diese Strecke (20) eine Dauer zwischen 4 und 8 Minuten hat und die Frigorienmenge, die der Masse aus Fleischelementen im Verlauf dieser Strecke (20) zugeführt wird, so bestimmt wird, dass die Temperatur an der Oberfläche dieser Fleischelemente am Ende der Kühlstrecke (20) zwischen -10 und -20 °C beträgt.

2. Verfahren nach Anspruch 1, bei dem die Masse aus Fleischelementen in der Form gebildet wird, dass sie im Wesentlichen Fleischelemente mit einer Dicke zwischen 3 und 4 cm enthält.

3. Herstellungsverfahren nach Anspruch 1 oder 2, bei dem die Frigorienmenge, die der Masse aus Fleischelementen im Verlauf der Kühlstrecke (20) zugeführt wird, zwischen 7 und 25 Frigorien/Stunde/100 kg Fleisch beträgt.

4. Herstellungsverfahren nach einem der vorhergehenden Ansprüche, bei dem die Frigorienmenge der Masse aus Fleischelementen im Verlauf der Kühlstrecke (20) zugeführt wird, indem diese Masse mindestens einem sehr kalten Luftstrom, vorzugsweise mehreren sehr kalten Luftströmen, ausgesetzt wird, die in mehreren Richtungen quer zu der Strecke der Masse verlaufen.

5. Herstellungsverfahren nach einem der vorhergehenden Ansprüche, bei dem die Masse aus gekühlten Fleischelementen durch Pressen einer Menge dieser Masse in Komprimierungsmitteln (16) komprimiert wird, die in drei im Wesentlichen orthogonalen Richtungen wirken.

6. Herstellungsverfahren nach Anspruch 5, bei dem die Menge der Masse aus Fleischelementen, die dazu bestimmt ist, durch Komprimierungsmittel (16) im Verlauf eines Komprimierungsschrittes komprimiert zu werden, in einem variablen Komprimierungsvolumen (32), das in den Komprimierungsmitteln (16) definiert wird, in zwei Takten bereitgestellt wird, in deren Verlauf jeweils etwa zwei Hälften der Menge der Masse aus Fleischelementen, die komprimiert werden soll, bereitgestellt wird, in der Form, dass die Verteilung der Masse aus Fleischelementen in dem variablen Komprimierungsvolumen (32) vor dem Komprimierungsschritt begünstigt wird.

7. Verfahren zur Herstellung von Fleischfragmenten in allgemeiner Scheibenform des Typs bei dem ein Fleischblock (B) hergestellt wird, der dazu bestimmt ist, in Scheiben geschnitten zu werden,
**dadurch gekennzeichnet, dass** der Fleischblock (B) gemäß dem Verfahren zur Herstellung eines Fleischblocks nach einem der vorhergehenden Ansprüche hergestellt wird und dieser Block (B) in Scheiben geschnitten wird.

8. Herstellungsverfahren nach Anspruch 7, bei dem der Fleischblock (B) in der Form geschnitten wird, dass Scheiben gebildet werden, die eine Fläche zwischen 5 und 10 cm² und eine Dicke zwischen 3 und 9 Zehntel mm haben.

## Claims

1. Method for producing a block of meat that is intended to be cut into sheets, of the type in which
- a loose mass of meat elements is formed,
- the mass of meat elements is cooled by causing it to follow a cooling path (20) during which a quantity of frigories is transmitted to the mass, and
- the block of meat (B) is formed by compressing the mass of cooled meat elements,
**characterized in that**
- the mass of meat elements is formed in such a way that it essentially comprises meat elements with a thickness of between 0.5 and 5 cm, the surface temperature of these meat elements being between 1 and 5°C at the start of the cooling path, then
- the mass of meat elements is made to follow the cooling path (20), this path (20) having a duration of between 4 and 8 minutes and the amount of frigories transmitted to the mass of meat elements during this path (20) being determined in such a way that at the end of the cooling path (20) the surface temperature of the meat elements is between -10 and -20°C.

2. Method according to claim 1, in which the mass of meat elements is formed in such a way that it essentially comprises meat elements of a thickness of between 3 and 4 cm.

3. Production method according to claim 1 or 2, in which the amount of frigories transmitted to the mass of meat elements during the cooling path (20) is between 7 and 25 frigories/hour/100 kg of meat.

4. Production method according to any one of the preceding claims, in which the amount of frigories is transmitted to the mass of meat elements during the cooling path (20) by subjecting this mass to at least one stream of very cold air, preferably several streams of very cold air extending in several directions transversely to the path of the mass.

5. Production method according to any one of the preceding claims, in which the mass of cooled meat elements is compressed by pressing a quantity of this mass in compression means (16) acting in three substantially orthogonal directions of compression.

6. Production method according to claim 5, in which the quantity of mass of meat elements intended to be compressed by the compression means (16) during the course of a compression step is supplied to a variable compression volume (32), defined in the compression means (16) in two stages during which around two halves of the quantity of mass of meat elements to be compressed are respectively supplied so as to encourage the distribution of the mass of meat elements in the variable compression volume (32) before the compression step.

7. Method of producing meat fragments in the overall form of sheets, of the type in which a block of meat (B) intended to be cut into sheets is produced,
**characterized in that** the block of meat (B) is produced in accordance with the method of manufacturing a block of meat according to any one of the preceding claims, and this block (B) is cut into sheets.

8. Production method according to claim 7, in which the block of meat (B) is cut in such a way as to form sheets having a surface area of between 5 and 10 cm² and a thickness of between 3 and 9 tenths of an mm.
